# EUROPEAN PATENT APPLICATION

(11) **EP 4 365 468 A1**
(43) Date of publication of application: **08.05.2024**
(21) Application number: 22830370.7
(22) Date of filing: 24.03.2022
(51) Int. Cl.: F16K 31/04

(54) **ELECTRIC VALVE AND ACTUATOR**

(30) Priority: 28.06.2021 JP 2021106941
(71) Applicant: Fujikoki Corporation, Tokyo 158-0082 (JP)
(72) Inventor: WATANABE, Takayuki, Tokyo 158-0082 (JP); YANAGISAWA, Shu, Tokyo 158-0082 (JP)
(74) Representative: Ter Meer Steinmeister & Partner
(86) International application number: PCT/JP2022/014010
(87) International publication number: WO 2023/276342

(57) **Abstract**

The present invention provides an electrically driven valve that is compact, and that can drive a valve element with a high reduction ratio. The electrically driven valve includes an output shaft configured to drive a valve element, a valve body portion including a valve chamber accommodating the valve element, a motor including a stator and a rotor, and a reduction mechanism configured to reduce a rotational speed of the rotor and transmit the reduced rotational speed to the output shaft, wherein the reduction mechanism includes a plurality of planetary gear reduction mechanisms that are connected in series and that include at least one mechanical paradox planetary gear reduction mechanism.

## Description

### [Technical Field]

The present invention relates to an electrically driven valve and an actuator.

### [Background Art]

Heretofore, electrically driven valves are attached in midway of a fluid piping system, for example, to open and close a fluid flow path and to perform flow rate control (refer, for example, to Patent Literature 1). According to such electrically driven valves, accurate flow rate control and good sealing performance when the valve is closed may be realized by adopting a planetary gear reduction mechanism to reduce a rotational speed of a stepping motor attached to a valve body and to transmit the reduced rotational speed to the valve element.

### [Citation List]

### [Patent Literature]

[Patent Literature 1] Japanese Unexamined Patent Application Publication No. 2012-197849

### [Summary of Invention]

### [Technical Problem]

According to the configuration of the electrically driven valve disclosed in Patent Literature 1, the directions of flow of fluid before and after passing through an orifice intersect one another, such that resistance occurs to the flow and smooth flow is obstructed. In contrast, for example, a ball valve adopts a configuration in which a spherical valve element having a hole formed thereto is rotated about a valve rod within a valve body to open and close a flow path, according to which the flow path can be formed linearly, which is advantageous in that the fluid resistance is small when the valve is fully opened.

Therefore, a configuration in which a ball valve is assembled to the electrically driven valve is considered. However, a general ball valve has a sealing member with a relatively large sealing diameter arranged between the spherical valve element and the valve body to prevent leakage of fluid, and a large sliding friction occurs between the valve element and the sealing member when the valve element is driven to rotate, such that there is a drawback in that the valve element must be rotated with a torque exceeding the sliding friction.

According to a so-called mechanical paradox planetary gear reduction mechanism, which is one type of a conventionally used planetary gear reduction mechanism a high reduction ratio, such as a reduction ratio of approximately 40, for example, may be obtained, but such a reduction ratio may still be insufficient to drive the ball valve. In contrast, the reduction ratio may be enhanced by increasing the number of teeth of gears in the planetary gear reduction mechanism, but such measures may lead to the enlargement of the outer diameter of the planetary gear reduction mechanism and may increase the size of the electrically driven valve. Further, regardless of whether the ball valve is used, demands to further enhance the reduction ratio of the planetary gear reduction mechanism exist. Of course, even in electrically driven valves having a lifting and lowering valve element, there are demands to further enhance the reduction ratio to improve the accuracy of control of flow rate or to enhance the sealing performance when the valve is closed.

The present invention aims at solving the problems mentioned above by providing an electrically driven valve and an actuator that is compact in size and that can drive a valve element with a high reduction ratio.

### [Means to Solve the Problem]

An electrically driven valve according to the present invention characterizes in including:
an output shaft configured to drive a valve element;
a valve body portion including a valve chamber accommodating the valve element;
a motor including a stator and a rotor; and
a reduction mechanism configured to reduce a rotational speed of the rotor and transmit the reduced rotational speed to the output shaft,
wherein the reduction mechanism includes a plurality of planetary gear reduction mechanisms that are connected in series and that include at least one mechanical paradox planetary gear reduction mechanism.

An actuator according to the present invention characterizes in including:
an output shaft configured to drive a valve element;
a motor including a stator and a rotor; and
a reduction mechanism configured to reduce a rotational speed of the rotor and transmit the reduced rotational speed to the output shaft,
wherein the reduction mechanism includes a plurality of planetary gear reduction mechanisms that are connected in series and that include at least one mechanical paradox planetary gear reduction mechanism.

### [Effects of Invention]

According to the present invention, an electrically driven valve and an actuator that is compact in size and that drives the valve element with a high reduction ratio may be provided.

### [Brief Description of Drawings]

[FIG. 1] FIG. 1 is a vertical cross-sectional view illustrating a valve opened state of an electrically driven valve according to a first embodiment of the present invention.
[FIG. 2] FIG. 2 is a perspective view illustrating in exploded state a reduction mechanism of the electrically driven valve according to the first embodiment.
[FIG. 3] FIG. 3 is a vertical cross-sectional view of a valve opened state of an electrically driven valve according to a second embodiment of the present invention.
[FIG. 4] FIG. 4 is a perspective view illustrating in exploded state a reduction mechanism of the electrically driven valve according to the second embodiment.
[FIG. 5] FIG. 5 is a vertical cross-sectional view illustrating a valve opened state of an electrically driven valve according to a third embodiment of the present invention.
[FIG. 6] FIG. 6 is a perspective view illustrating in exploded state a reduction mechanism of the electrically driven valve according to the third embodiment.
[FIG. 7] FIG. 7 is a vertical cross-sectional view illustrating a valve opened state of an electrically driven valve according to a fourth embodiment of the present invention.
[FIG. 8] FIG. 8 is a perspective view illustrating in exploded state a reduction mechanism of the electrically driven valve according to the fourth embodiment.
[FIG. 9] FIG. 9 is a vertical cross-sectional view illustrating a valve opened state of an electrically driven valve according to a fifth embodiment of the present invention.
[FIG. 10] FIG. 10 is a perspective view illustrating in exploded state a reduction mechanism of the electrically driven valve according to the fifth embodiment.
[FIG. 11] FIG. 11 is a vertical cross-sectional view illustrating a valve closed state of an electrically driven valve according to a sixth embodiment of the present invention.

### [Description of Embodiments]

Now, embodiments of an electrically driven valve and an actuator according to the present invention will be described with reference to the drawings. In the present specification, a side having a rotor is referred to as an upper side, and a side having a valve element is referred to as a lower side. In the specification, a mechanical paradox planetary gear reduction mechanism is defined as one type of a planetary gear reduction mechanism. In the present specification, it is assumed that a rotational speed is entered initially from a rotor to a first stage reduction portion (or planetary gear reduction mechanism) arranged closest to the rotor, and the rotational speed is output from an output shaft coupled to a final stage reduction portion (or planetary gear reduction mechanism) arranged closest to the output shaft. Further, the reduction portion (or planetary gear reduction mechanism) being "connected in series" means that a rotational speed output from an N-th stage reduction portion is entered to an (N+1)-th stage reduction portion.

An actuator according to the present embodiment includes an output shaft that drives a valve element, a motor including a stator and a rotor, and a reduction mechanism that reduces a rotational speed of the rotor and transmits the reduced rotational speed to the output shaft, wherein the reduction mechanism includes a plurality of planetary gear reduction mechanisms that are connected in series and that include at least one mechanical paradox planetary gear reduction mechanism.

### [First Embodiment]

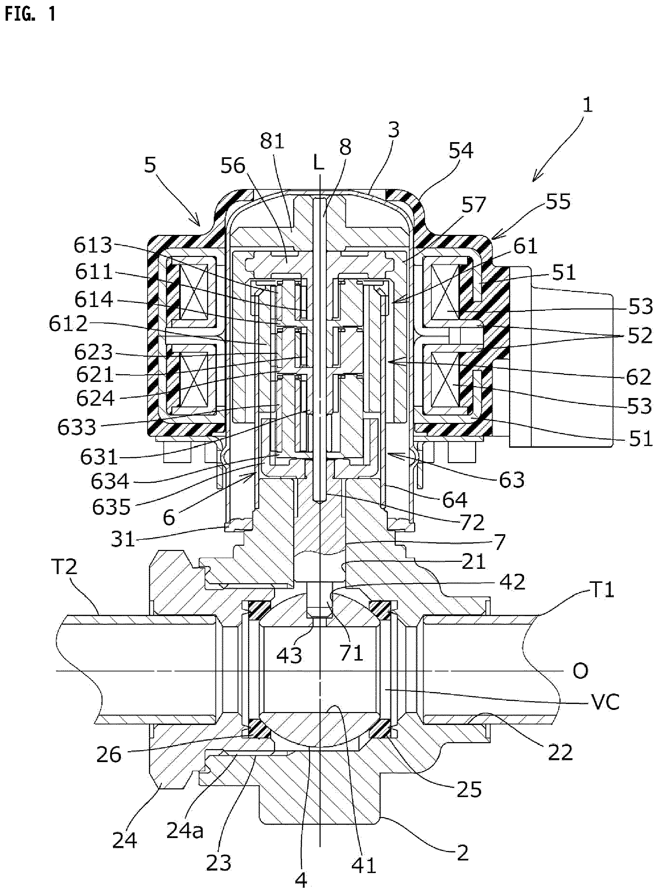

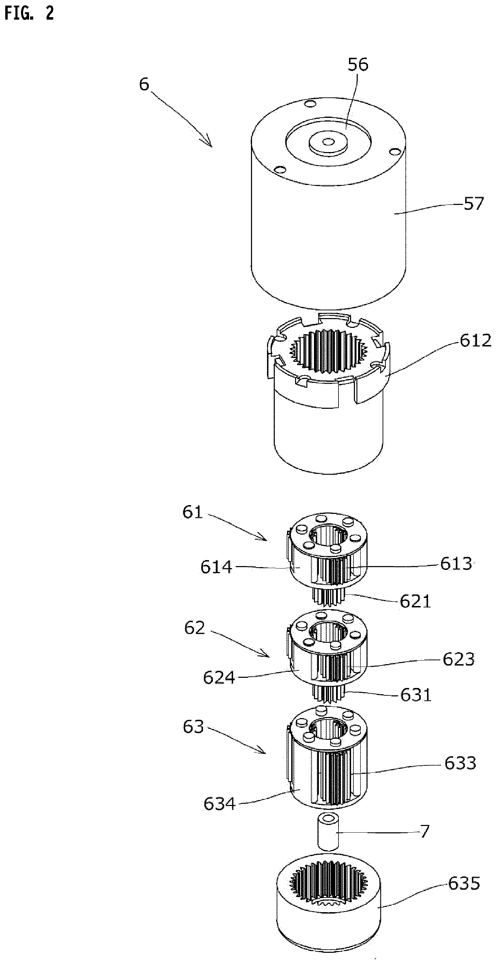

FIG. 1 is a vertical cross-sectional view illustrating a valve opened state of an electrically driven valve 1 according to a first embodiment of the present invention. FIG. 2 is a perspective view illustrating in exploded state a reduction mechanism 6 of the electrically driven valve 1 according to the first embodiment. The electrically driven valve 1 according to the present embodiment is used to adjust a refrigerant flow rate in a refrigeration cycle, for example. An axis of the electrically driven valve 1 is denoted by L.

The electrically driven valve 1 is mainly equipped with a valve body portion 2, a can 3 fixed to the valve body portion 2 through an annular member 31, a valve element 4 arranged in an interior space of the valve body portion 2, a stepping motor 5 that generates rotation to drive the valve element 4, and the reduction mechanism 6 that is arranged in the interior of the can 3, that reduces a rotational speed of the stepping motor 5, and that transmits the reduced rotational speed to the valve element 4 through an output shaft 7.

The valve body portion 2 is made of a hollow metal (which according to the present embodiment is brass) formed through cutting, forging, or casting, for example, and having a valve chamber VC defined in the interior thereof. The valve body portion 2 includes a vertical opening 21 that is formed to extend from the upper side along the axis L toward the valve chamber VC. Further, a lateral opening 22 and a female screw hole 23 each having an axis orthogonal to the axis L are formed in a manner interposing the valve chamber VC therebetween and communicated with the valve chamber VC. The axis of the lateral opening 22 and the female screw hole 23 is referred to as O.

A first piping T1 is fit to the lateral opening 22 and secured thereto by brazing, for example. Further, a male screw 24a of a joint 24 to which a second piping T2 is fixed by brazing and the like is screw-engaged to the female screw hole 23. The joint 24 constitutes a part of the valve body portion 2 by being coupled to the valve body portion 2.

The spherical valve element 4 is arranged rotatably about the axis L within the valve chamber VC. The valve element 4 includes a flow path opening 41 having a cylindrical shape with an axis orthogonal to the axis L, and an upper side opening 42 that is formed on the upper side of the valve element 4. The flow path opening 41 and the upper side opening 42 are communicated through a small hole 43. Therefore, the refrigerant passing through the flow path opening 41 may enter the interior of the can 3 through the small hole 43 and a gap formed between the output shaft 7 and the upper side opening 42. An outer diameter of the valve element 4 is smaller than an inner diameter of the female screw hole 23.

The output shaft 7 is fit relatively rotatably within the vertical opening 21 of the valve body portion 2, with a reduced diameter portion 71 protruding from a lower end of the output shaft 7 fit to the upper side opening 42 of the valve element 4 relatively non-rotatably, and the output shaft 7 is rotated integrally with the valve element 4. The cross-sectional shapes of the upper side opening 42 and the reduced diameter portion 71 orthogonal to the axis L may be non-circular shapes that correspond to each other.

An annular sealing member 25 is arranged on an inner wall of the valve chamber VC in a vicinity of an inner end of the lateral opening 22, with the axis O set as the center axis. Further, an annular sealing member 26 is arranged on a wall of the joint 24 facing the valve chamber VC, with the axis O set as the center axis. Inner circumferential surfaces of the sealing members 25 and 26 preferably having common shapes constitute a portion of the spherical shape, and are attached airtightly to an outer circumferential surface of the valve element 4 so as to seal the space formed between the valve element 4 and the sealing members. Inner diameters of the sealing members 25 and 26 are greater than the outer diameter of the flow path opening 41, such the space between the sealing members 25 and 26 and the valve element 4 is sealed regardless of the rotational position of the valve element 4.

The stepping motor 5 includes a stator 55 composed of a yoke 51, a bobbin 52, a coil 53, and a resin mold cover 54, and a rotor 57 that is rotatably arranged with respect to the can 3 in the interior of the can 3 and that has a rotor support member 56 fixed to an inner side at an upper portion thereof. The stator 55 is fit and fixed to an outer side of the can 3.

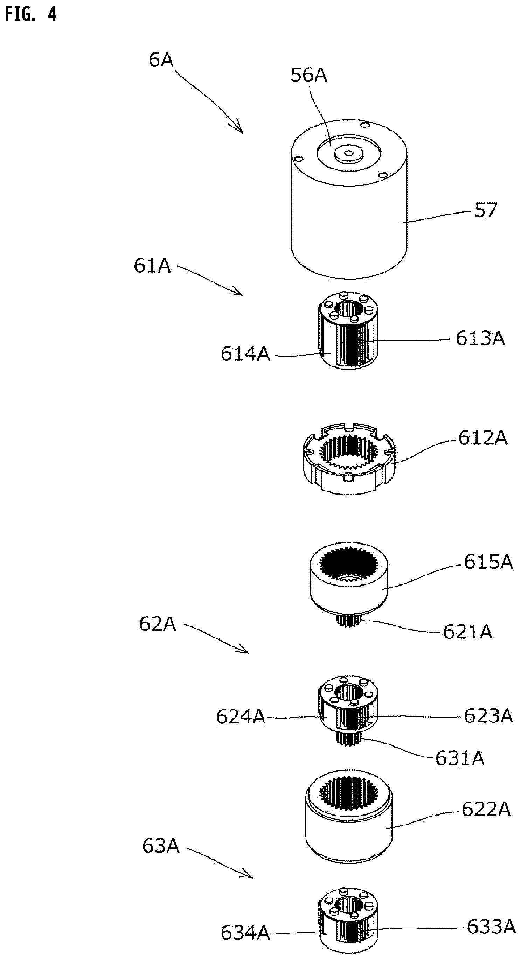

The reduction mechanism 6 includes a first stage reduction portion 61, a second stage reduction portion 62, and a third stage reduction portion 63 that are arranged coaxially and connected in series. The first stage reduction portion 61 includes, in the inner circumference side of the rotor 57, a sun gear 611 that is formed integrally with the rotor support member 56, an upper part of a fixing ring gear 612 that is fixed through a thin-wall cylindrical body 64 fastened to an upper part of the valve body portion 2, a planetary gear 613 that is arranged between and meshed with each of the sun gear 611 and the fixing ring gear 612, and a carrier 614 that supports the planetary gear 613 rotatably, by which a first planetary gear reduction mechanism is composed. The rotor 57 is included in FIG. 2 for convenience, but at least the sun gear 611 of the rotor 57 is the component constituting the reduction mechanism 6 (the first stage reduction portion 61). The same applies for FIGs. 4, 6, 8, and 10.

The second stage reduction portion 62 includes a sun gear 621 that is formed integrally with a shaft extending downward from the carrier 614 of the first stage reduction portion 61 along the axis L, an intermediate part of the fixing ring gear 612, a planetary gear 623 that is arranged between and meshed with each of the sun gear 621 and the fixing ring gear 612, and a carrier 624 that supports the planetary gear 623 rotatably, by which a second planetary gear reduction mechanism is composed.

The third stage reduction portion 63 includes a sun gear 631 that is formed integrally with a shaft extending downward from the carrier 624 of the second stage reduction portion 62 along the axis L, a lower part of the fixing ring gear 612, a planetary gear 633 that is arranged between and meshed with each of the sun gear 631 and the fixing ring gear 612, a carrier 634 that supports the planetary gear 633 rotatably, and an output gear member 635 having a cylindrical shape with a bottom and equipped with teeth that is formed on an inner circumference thereof and that meshes with the planetary gear 633, by which a mechanical paradox planetary gear reduction mechanism (third planetary gear reduction mechanism) is composed. The number of teeth of the fixing ring gear 612 is set to differ from the number of teeth of the output gear member 635.

In the present embodiment, the first stage reduction portion 61, the second stage reduction portion 62, and the third stage reduction portion 63 use the fixing ring gear 612 as a common member, such that the reduction mechanism 6 may have a compact shape. The planetary gear adopted in the planetary gear reduction mechanism of the final stage (which according to the present embodiment is the planetary gear 633) is preferably made of metal, which also applies for other embodiments.

An upper end of the output shaft 7 is fit by press fitting to a center opening formed to a bottom wall of the output gear member 635, and they are designed to rotate integrally. A lower end of a shaft member 8 is fit by press fitting to a hole 72 formed at a center of an upper end of the output shaft 7. An upper end of the shaft member 8 has an approximately same outer diameter as an inner diameter of the can 3, and the shaft member 8 is inserted to a center hole of a support member 81 that is arranged to be inscribed in the can 3 at an upper side of the rotor support member 56. The shaft member 8 is passed through the rotor support member 56, the carrier 614, and the carrier 624, and retains these members relatively rotatably. The rotor 57 itself is retained by the support member 81 and the like so as not to move up and down in the interior of the can 3, and the positional relationship thereof with the stator 55 that is externally fixed to the can 3 is constantly maintained.

### (Operation of Electrically Driven Valve)

In a state where the valve element 4 is rotated about the axis L with respect to the valve body portion 2 such that the axis of the flow path opening 41 of the valve element 4 is orthogonal to the axis O (where the flow path opening 41 is directed toward the direction perpendicular to the sheet surface of FIG, 1), the flow path opening 41 will be positioned on the outer side of the sealing members 25 and 26, and the first piping T1 and the second piping T2 will be shutoff within the valve chamber VC. Therefore, refrigerant will not move between the first piping T1 and the second piping T2. The valve element 4 in this state is arranged at a shutoff position where the flow path is shutoff.

If the rotor 57 of the stepping motor 5 is driven to rotate from the above state, a rotational speed of the rotor 57 is transmitted through the rotor support member 56 to the sun gear 611 of the first stage reduction portion 61, and a rotational speed reduced by a first reduction ratio is output from the carrier 614.

Furter, a rotational speed received by the carrier 614 is transmitted to the sun gear 621 of the second stage reduction portion 62, and a rotational speed reduced by a second reduction ratio is output from the carrier 624.

Further, a rotational speed received by the carrier 624 is transmitted to the sun gear 631 of the third stage reduction portion 63, and a rotational speed reduced by a third reduction ratio is output from the output gear member 635. A rotational speed of the output gear member 635 is transmitted to the output shaft 7, by which the valve element 4 rotates about the axis L.

In a state where the valve element 4 rotates for 90 degrees, the flow path opening 41 will be positioned in the inner side of the sealing members 25 and 26, such that the first piping T1 and the second piping T2 are communicated through the valve chamber VC. By maintaining such state, refrigerant flows between the first piping T1 and the second piping T2. Since the flow path opening 41 is connected straight to the first piping T1 and the second piping T2, the refrigerant flows smoothly. The valve element 4 in this state is at an opened state in which the flow path is opened.

By further driving the rotor 57 of the stepping motor 5 to rotate, the flow path opening 41 will be positioned on the outer side of the sealing members 25 and 26, and the first piping T1 and the second piping T2 are shutoff within the valve chamber VC, such that refrigerant will not flow between the first piping T1 and the second piping T2.

The present embodiment is provided with the reduction mechanism 6 in which three planetary gear reduction mechanisms are connected in series, such that a high reduction ratio in which the first reduction ratio, the second reduction ratio, and the third reduction ratio are multiplied may be realized. Specifically, by adopting a mechanical paradox planetary gear reduction mechanism as at least one of the planetary gear reduction mechanisms, the reduction ratio can be set to be 100 or more, for example. Therefore, even if the rotational torque generated by the stepping motor 5 is small, the valve element 4 may be rotated against the significant sliding friction that occurs between the valve element 4 and the sealing members 25 and 26.

### [Second Embodiment]

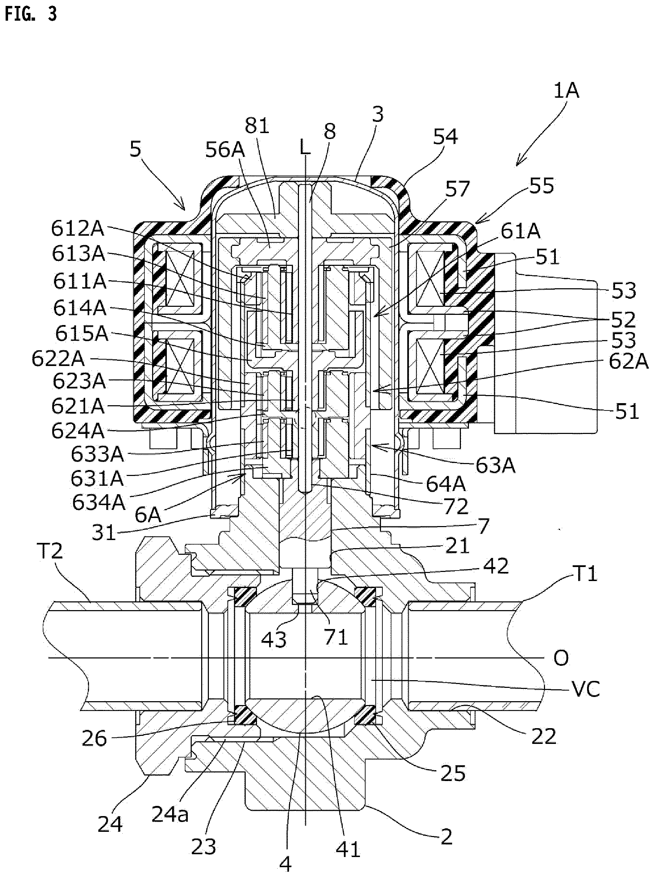

FIG. 3 is a vertical cross-sectional view illustrating a valve opened state of an electrically driven valve 1A according to a second embodiment of the present invention. FIG. 4 is a perspective view illustrating in exploded state a reduction mechanism 6A of the electrically driven valve 1A according to the second embodiment. In the present embodiment, the valve body portion 2, the can 3, the valve element 4, and the stepping motor 5 are similar to the embodiment described above, such that the same reference numbers are assigned and repeated descriptions thereof are omitted.

According to the present embodiment, fixing ring gears 612A and 622A that are coupled to the upper part of the valve body portion 2 through a thin-wall cylindrical body 64A are fixed coaxially and spaced apart from each other, and an output gear member 615A of a first stage reduction portion 61A is arranged between the fixing ring gears 612A and 622A. The fixing ring gears 612A and 622A have the same outer diameter and the same number of teeth, but they may also be designed to have different outer diameters and different number of teeth.

The reduction mechanism 6A includes a first stage reduction portion 61A, a second stage reduction portion 62A, and a third stage reduction portion 63A that are arranged coaxially and connected in series. The first stage reduction portion 61A includes, in an inner circumference side of the rotor 57, a sun gear 611A that is formed integrally with the rotor support member 56A, a fixing ring gear 612A, a planetary gear 613A that is arranged between and meshed with each of the sun gear 611A and the fixing ring gear 612A, a carrier 614A that supports the planetary gear 613A rotatably, and the output gear member 615A having a cylindrical shape with a bottom that is equipped with teeth that mesh with the planetary gear 613A in an inner circumference thereof, by which a mechanical paradox planetary gear reduction mechanism (first planetary gear reduction mechanism) is composed. The number of teeth of the fixing ring gear 612A is set to differ from the number of teeth of the output gear member 615A.

The second stage reduction portion 62A includes a sun gear 621A that is formed integrally with a shaft extending downward from the output gear member 615A of the first stage reduction portion 61A along the axis L, an upper part of a fixing ring gear 622A, a planetary gear 623A that is arranged between and meshed with each of the sun gear 621A and the fixing ring gear 622A, and a carrier 624A that supports the planetary gear 623A rotatably, by which a second planetary gear reduction mechanism is composed.

The third stage reduction portion 63A includes a sun gear 631A that is formed integrally with a shaft extending downward from the carrier 624A along the axis L, a lower part of the fixing ring gear 622A, a planetary gear 633A that is arranged between and meshed with each of the sun gear 631A and the fixing ring gear 622A, and a carrier 634A that supports the planetary gear 633A rotatably, by which a third planetary gear reduction mechanism is composed. The upper end of the output shaft 7 fits to an opening formed at a center of a bottom wall of the carrier 634A, and the two members rotate integrally.

### (Operation of Electrically Driven Valve)

If the rotor 57 of the stepping motor 5 is driven to rotate from the valve closed state, a rotational speed of the rotor 57 is transmitted through the rotor support member 56A to the sun gear 611A of the first stage reduction portion 61A, and a rotational speed reduced by a first reduction ratio is output from the output gear member 615A.

Furter, a rotational speed received by the output gear member 615A is transmitted to the sun gear 621A of the second stage reduction portion 62A, and a rotational speed reduced by a second reduction ratio is output from the carrier 624A.

Further, a rotational speed received by the carrier 624A is transmitted to the sun gear 631A of the third stage reduction portion 63A, and a rotational speed reduced by a third reduction ratio is output from the carrier 634A. A rotational speed of the carrier 634A is transmitted to the output shaft 7, by which the valve element 4 rotates about the axis L to realize a valve opened state.

### [Third Embodiment]

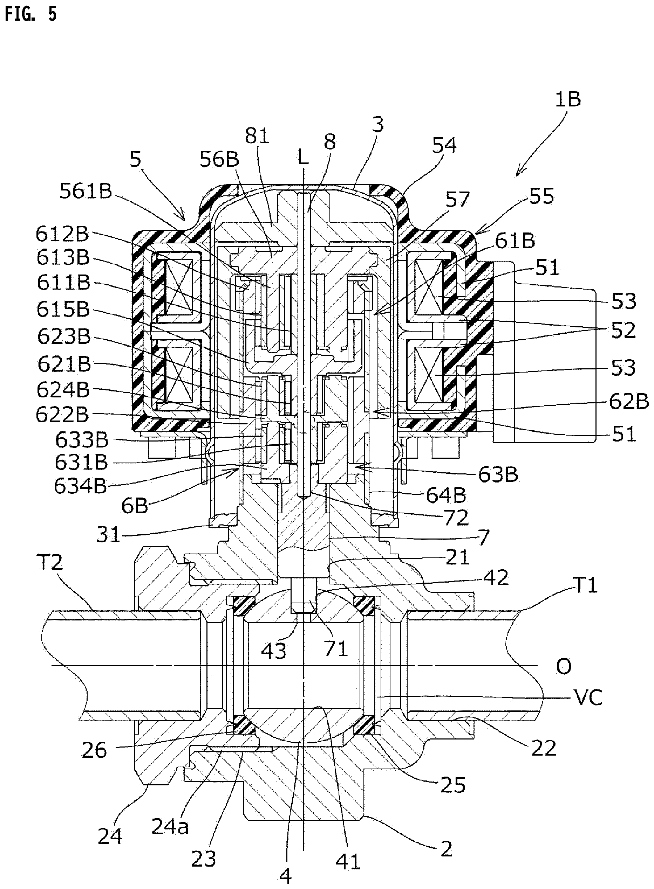

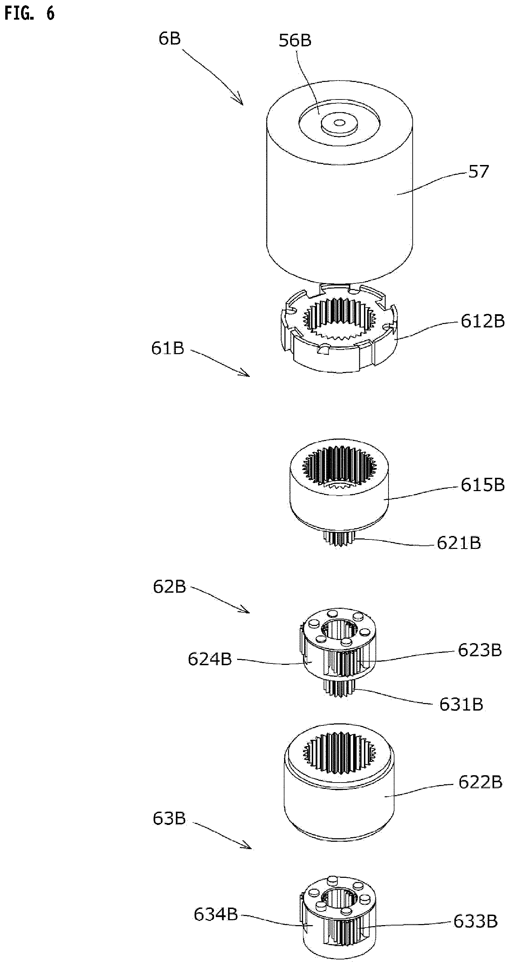

FIG. 5 is a vertical cross-sectional view illustrating a valve opened state of an electrically driven valve 1B according to a third embodiment of the present invention. FIG. 6 is a perspective view illustrating in exploded state a reduction mechanism 6B of the electrically driven valve 1B according to the third embodiment. In the present embodiment, the valve body portion 2, the can 3, the valve element 4, and the stepping motor 5 are similar to the embodiment described above, such that the same reference numbers are assigned and repeated descriptions thereof are omitted.

According to the present embodiment, fixing ring gears 612B and 622B that are coupled to the upper part of the valve body portion 2 through a thin-wall cylindrical body 64B are fixed coaxially and spaced apart from each other, and an output gear member 615B of a first stage reduction portion 61B is arranged between the fixing ring gears 612B and 622B. The fixing ring gears 612B and 622B have the same outer diameter and the same number of teeth, but they may also be designed to have different outer diameters and different number of teeth.

Further, a rotor support member 56B is equipped with a plurality of shafts 561B that are parallel to the axis L, and a planetary gear 613B of the first stage reduction portion 61B is rotatably supported in the circumference of the shafts 561B. That is, the rotor support member 56B serves as a carrier in the first stage reduction portion 61B.

The reduction mechanism 6B includes a first stage reduction portion 61B, a second stage reduction portion 62B, and a third stage reduction portion 63B that are arranged coaxially and connected in series. The first stage reduction portion 61B includes a sun gear 611B that is supported rotatably with respect to the shaft member 8, a fixing ring gear 612B, a planetary gear 613B that is arranged between and meshed with each of the sun gear 611B and the fixing ring gear 612B, the rotor support member 56B that supports the planetary gear 613B rotatably, and the output gear member 615B having a cylindrical shape with a bottom that is equipped with teeth that mesh with the planetary gear 613B in an inner circumference thereof, by which a mechanical paradox planetary gear reduction mechanism (first planetary gear reduction mechanism) is composed. The number of teeth of the fixing ring gear 612B is set to differ from the number of teeth of the output gear member 615B.

The second stage reduction portion 62B includes a sun gear 621B that is formed integrally with a shaft extending downward from the output gear member 615B of the first stage reduction portion 61B along the axis L, an upper part of a fixing ring gear 622B, a planetary gear 623B that is arranged between and meshed with each of the sun gear 621B and the fixing ring gear 622B, and a carrier 624B that supports the planetary gear 623B rotatably, by which a second planetary gear reduction mechanism is composed.

The third stage reduction portion 63B includes a sun gear 631B that is formed integrally with a shaft extending downward from the carrier 624B along the axis L, a lower part of the fixing ring gear 622B, a planetary gear 633B that is arranged between and meshed with each of the sun gear 631B and the fixing ring gear 622B, and a carrier 634B that supports the planetary gear 633B rotatably, by which a third planetary gear reduction mechanism is composed. The upper end of the output shaft 7 fits to an opening formed at a center of a bottom wall of the carrier 634B, and the two members rotate integrally.

### (Operation of Electrically Driven Valve)

If the rotor 57 of the stepping motor 5 is driven to rotate from the valve closed state, a rotational speed of the rotor 57 is transmitted to the rotor support member 56B, and the rotor support member 56B serving as a carrier is rotated, by which the planetary gear 613B revolves around the sun gear 611B, and a rotational speed reduced by a first reduction ratio is output from the output gear member 615B.

Furter, a rotational speed received by the output gear member 615B is transmitted to the sun gear 621B of the second stage reduction portion 62B, and a rotational speed reduced by a second reduction ratio is output from the carrier 624B.

Further, a rotational speed received by the carrier 624B is transmitted to the sun gear 631B of the third stage reduction portion 63B, and a rotational speed reduced by a third reduction ratio is output from the carrier 634B. A rotational speed of the carrier 634B is transmitted to the output shaft 7, by which the valve element 4 rotates about the axis L to realize a valve opened state.

### [Fourth Embodiment]

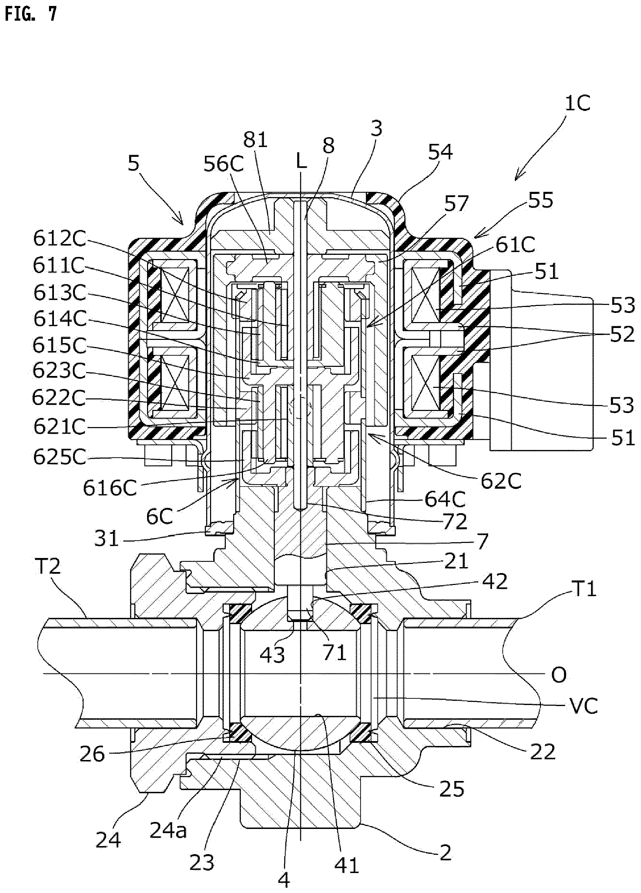

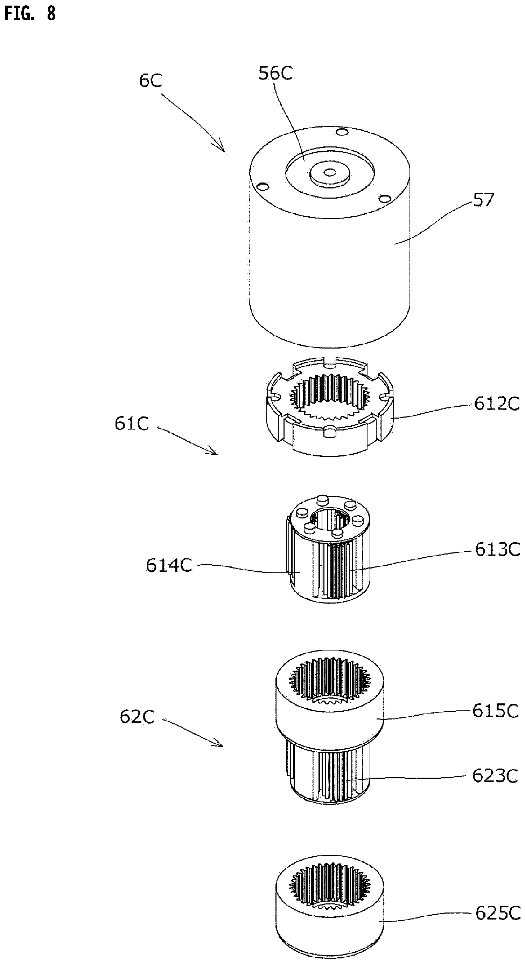

FIG. 7 is a vertical cross-sectional view illustrating a valve opened state of an electrically driven valve 1C according to a fourth embodiment of the present invention. FIG. 8 is a perspective view illustrating in exploded state a reduction mechanism 6C of the electrically driven valve 1C according to the fourth embodiment. In the present embodiment, the valve body portion 2, the can 3, the valve element 4, and the stepping motor 5 are similar to the embodiment described above, such that the same reference numbers are assigned and repeated descriptions thereof are omitted.

According to the present embodiment, fixing ring gears 612C and 622C that are coupled to the upper part of the valve body portion 2 through a thin-wall cylindrical body 64C are fixed coaxially and spaced apart from each other, and an output gear member 615C of a first stage reduction portion 61C is arranged between the fixing ring gears 612C and 622C. The fixing ring gears 612C and 622C have the same outer diameter and the same number of teeth, but they may also be designed to have different outer diameters and different number of teeth.

Further, the output gear member 615C is equipped with a plurality of shafts 616C that are parallel to the axis L, and a planetary gear 623C of a second stage reduction portion 62C is rotatably supported in the circumference of the shafts 616C. That is, the output gear member 615C serves as a carrier in the second stage reduction portion 62C.

The reduction mechanism 6C includes a first stage reduction portion 61C and a second stage reduction portion 62C that are arranged coaxially and connected in series. The first stage reduction portion 61C includes, in an inner circumference side of the rotor 57, a sun gear 611C that is formed integrally with the rotor support member 56C, a fixing ring gear 612C, a planetary gear 613C that is arranged between and meshed with each of the sun gear 611C and the fixing ring gear 612C,a carrier 614C that supports the planetary gear 613C rotatably, and the output gear member 615C having a cylindrical shape with a bottom that is equipped with teeth that mesh with the planetary gear 613C in an inner circumference thereof, by which a mechanical paradox planetary gear reduction mechanism (first planetary gear reduction mechanism) is composed. The number of teeth of the fixing ring gear 612C is set to differ from the number of teeth of the output gear member 615C.

The second stage reduction portion 62C includes a sun gear 621C that is supported rotatably with respect to the shaft member 8, a fixing ring gear 622C, a planetary gear 623C that is arranged between and meshed with each of the sun gear 621C and the fixing ring gear 622C, an output gear member 615C that rotatably supports the planetary gear 623C, and an output gear member 625C having a cylindrical shape with a bottom equipped with teeth that mesh with the planetary gear 623C on an inner circumference thereof, by which a mechanical paradox planetary gear reduction mechanism (third planetary gear reduction mechanism) is composed. The number of teeth of the fixing ring gear 622C is set to differ from the number of teeth of the output gear member 625C. The upper end of the output shaft 7 fits to an opening formed at a center of a bottom wall of the carrier 625C, and the two members rotate integrally.

### (Operation of Electrically Driven Valve)

If the rotor 57 of the stepping motor 5 is driven to rotate from the valve closed state, a rotational speed of the rotor 57 is transmitted to the sun gear 611C of the first stage reduction portion 61C through the rotor support member 56C, and a rotational speed reduced by a first reduction ratio is output from the output gear member 615C.

By the rotation of the output gear member 615C serving as a carrier, the planetary gear 623C revolves around the sun gear 621C, and a rotational speed reduced by a second reduction ratio is output from the output gear member 625C. A rotational speed of the output gear member 625C is transmitted to the output shaft 7, by which the valve element 4 rotates about the axis L to realize a valve opened state.

### [Fifth Embodiment]

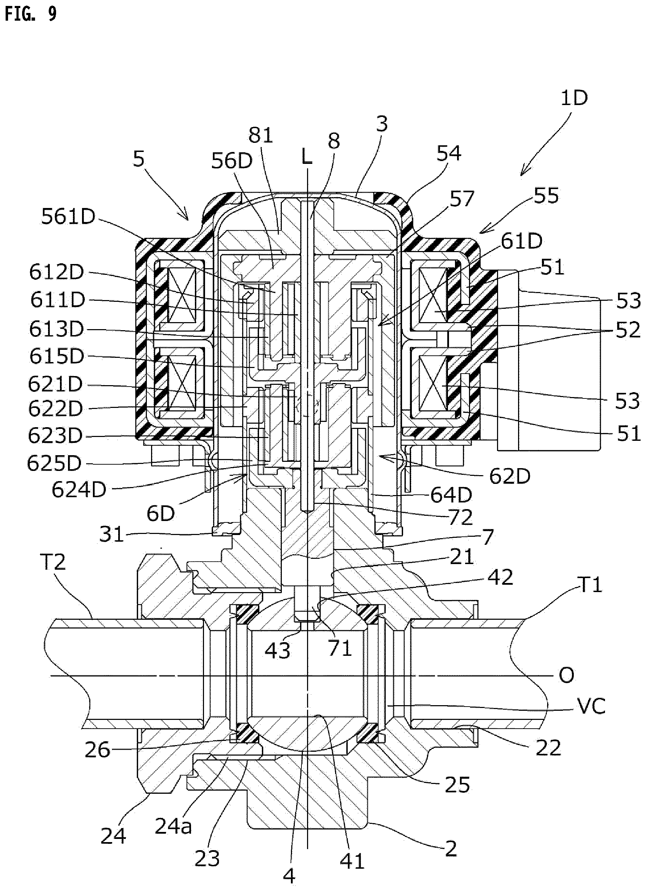

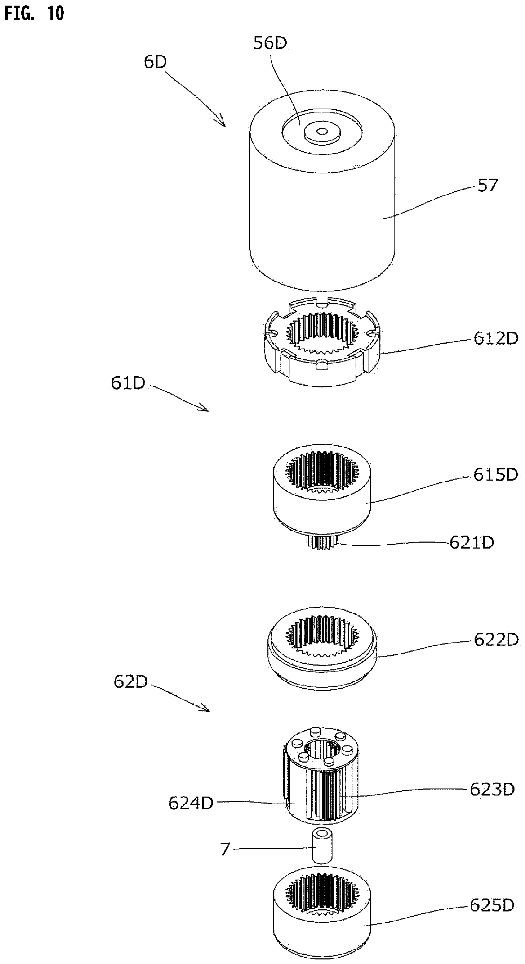

FIG. 9 is a vertical cross-sectional view illustrating a valve opened state of an electrically driven valve 1D according to a fifth embodiment of the present invention. FIG. 10 is a perspective view illustrating in exploded state a reduction mechanism 6D of the electrically driven valve 1D according to the fifth embodiment. In the present embodiment, the valve body portion 2, the can 3, the valve element 4, and the stepping motor 5 are similar to the embodiment described above, such that the same reference numbers are assigned and repeated descriptions thereof are omitted.

According to the present embodiment, fixing ring gears 612D and 622D that are coupled to the upper part of the valve body portion 2 through a thin-wall cylindrical body 64D are fixed coaxially and spaced apart from each other, and an output gear member 615D of a first stage reduction portion 61D is arranged between the fixing ring gears 612D and 622D. The fixing ring gears 612D and 622D have the same outer diameter and the same number of teeth, but they may also be designed to have different outer diameters and different number of teeth.

Further, a rotor support member 56D is equipped with a plurality of shafts 561D that are parallel to the axis L, and a planetary gear 613D of the first stage reduction portion 61D is rotatably supported in the circumference of the shafts 561D. That is, the rotor support member 56D serves as a carrier in the first stage reduction portion 61D.

The reduction mechanism 6D includes the first stage reduction portion 61D and a second stage reduction portion 62D that are arranged coaxially and connected in series. The first stage reduction portion 61D includes a sun gear 611D that is formed rotatably with respect to the shaft member 8, a fixing ring gear 612D, a planetary gear 613D that is arranged between and meshed with each of the sun gear 611D and the fixing ring gear 612D, a rotor support member 56D rotatably supporting the planetary gear 613D, and the output gear member 615D having a cylindrical shape with a bottom that is equipped with teeth that mesh with the planetary gear 613D in an inner circumference thereof, by which a mechanical paradox planetary gear reduction mechanism (first planetary gear reduction mechanism) is composed. The number of teeth of the fixing ring gear 612D is set to differ from the number of teeth of the output gear member 615D.

The second stage reduction portion 62D includes a sun gear 621D that is formed integrally with a shaft that extends downward along the axis L from the output gear member 615D of the first stage reduction portion 61D, a fixing ring gear 622D, a planetary gear 623D that is arranged between and meshed with each of the sun gear 621D and the fixing ring gear 622D, a carrier 624D that rotatably supports the planetary gear 623D, and an output gear member 625D having a cylindrical shape with a bottom equipped with teeth that mesh with the planetary gear 623D on an inner circumference thereof, by which a mechanical paradox planetary gear reduction mechanism (second planetary gear reduction mechanism) is composed. The number of teeth of the fixing ring gear 622D is set to differ from the number of teeth of the output gear member 625D. The upper end of the output shaft 7 fits to an opening formed at a center of a bottom wall of the output gear member 625D, and the two members rotate integrally.

### (Operation of Electrically Driven Valve)

If the rotor 57 of the stepping motor 5 is driven to rotate from the valve closed state, a rotational speed of the rotor 57 is transmitted to the rotor support member 56D, and the rotor support member 56D serving as a carrier rotates, by which the planetary gear 613D revolves around the sun gear 611D, and the rotational speed reduced by a first reduction ratio is output from the output gear member 615D.

Further, the rotational speed received by the output gear member 615D is transmitted to the sun gear 621D of the second stage reduction portion 62D, and the rotational speed reduced by a second reduction ratio is output from the output gear member 625D. A rotational speed of the output gear member 625D is transmitted to the output shaft 7, by which the valve element 4 rotates about the axis L to realize a valve opened state.

### [Sixth Embodiment]

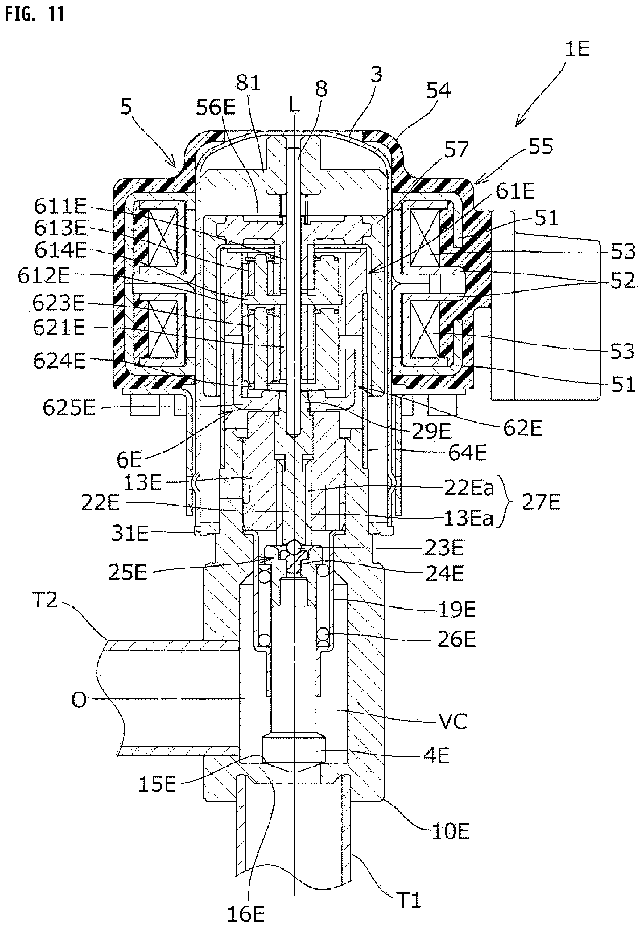

FIG. 11 is a vertical cross-sectional view illustrating a valve closed state of an electrically driven valve 1E according to a sixth embodiment of the present invention. In the present embodiment, the can 3 and the stepping motor 5 are similar to those of the embodiments described above, such that the same reference numbers are assigned and repeated descriptions thereof are omitted. An axis of the electrically driven valve 1E is denoted by L.

The electrically driven valve 1E of the present embodiment is composed of a valve body portion 10E including a valve seat 15E formed in the interior of the valve chamber VC, a can 3 having a cylindrical shape with a top part fixed to the valve body portion 10E through a base plate 31E, a stepping motor 5 composed of the stator 55 attached to an exterior of the can 3 and the rotor 57 provided in the interior of the can 3, a reduction mechanism 6E that reduces a rotational speed of the rotor 57 and transmits the reduced rotational speed, a valve element 4E that abuts against or moves away from the valve seat 15E to control a passing amount of fluid, and a screw drive member 22E that converts a rotary motion (rotational movement) of an output gear of the reduction mechanism 6E through a screw feed mechanism 27E into a linear motion (linear movement) to drive the valve element 4E.

The valve body portion 10E is provided with a valve port 16E communicated with the valve chamber VC, wherein the first piping T1 is connected by brazing etc. to the side having the valve port 16E, and the second piping T2 is connected by brazing etc. in a manner communicated with an opening formed on a side wall of the valve chamber VC. An axis of the second piping T2 is denoted by O. The axis O is orthogonal to the axis L.

Further, a screw bearing member 13E having a female screw portion 13Ea formed at a center of a lower end is inserted and fit to an upper part of the valve chamber VC of the valve body portion 10E, and it is fixed through press fitting etc. to the valve body portion 10E.

The reduction mechanism 6E includes a first stage reduction portion 61E and a second stage reduction portion 62E that are arranged coaxially and connected in series. The first stage reduction portion 61E includes, in the inner circumference side of the rotor 57, a sun gear 611E that is formed integrally with the rotor support member 56E, an upper part of a fixing ring gear 612E that is fixed through a thin-wall cylindrical body 64E fastened to an upper part of the valve body portion 10E, a planetary gear 613E that is arranged between and meshed with each of the sun gear 611E and the fixing ring gear 612E, and a carrier 614E that supports the planetary gear 613E rotatably, by which a first planetary gear reduction mechanism is composed.

The second stage reduction portion 62E includes a sun gear 621E that is supported rotatably with respect to the shaft member 8, a lower part of the fixing ring gear 612E, a planetary gear 623E that is arranged between and meshed with each of the sun gear 621E and the fixing ring gear 612E, a carrier 624E that supports the planetary gear 623E rotatably, and an output gear member 625E having a cylindrical shape with a bottom and equipped with teeth that meshes with the planetary gear 623E formed on an inner circumference thereof, by which a mechanical paradox planetary gear reduction mechanism (second planetary gear reduction mechanism) is composed. The number of teeth of the fixing ring gear 612E is set to differ from the number of teeth of the output gear member 625E.

The shaft member 8 passes through the rotor support member 56E and the sun gear 621E and retains these members rotatably, and the upper end of the shaft member 8 is supported by the support member 81 arranged on an inner side of a top part of the can 3.

An upper part of an output shaft portion 29E having a stepped cylindrical shape formed on an upper part of a screw drive member (output shaft) 22E is fit by press fitting to a center of a bottom portion of the output gear member 625E, and a lower end of the shaft member 8 is fit by press fitting to an opening on an upper part of the output shaft portion 29E.

A male screw portion 22Ea formed on a lower part of the screw drive member 22E is screwed onto the female screw portion 13Ea of the screw bearing member 13E. A rotary motion of the output gear member 625E (that is, the rotor 57) is converted into linear motion along the axis L by a screw feed mechanism (conversion mechanism) 27E composed of the male screw portion 22Ea and the female screw portion 13Ea.

The output gear member 625E is coupled integrally to the screw drive member 22E, and when the output gear member 625E (the rotor 57) rotates, the output gear member 625E and the screw drive member 22E rotate integrally and move in linear motion along the axis L with respect to the valve body portion 10E. In correspondence with the lifting and lowering of the output gear member 625E, the carrier 624E and the planetary gear 623E placed on a bottom surface of the output gear member 625E is also lifted and lowered.

The linear motion of the screw drive member 22E is transmitted to the shaft-shaped valve element 4E through a ball-shaped joint 25E composed of a ball 23E and a ball seat 24E, and the valve element 4E is guided by a spring case 19E having a stepped cylindrical shape fixed to the interior of the valve body portion 10E and moves in the direction of the axis L. A helical compression spring 26E is compressed between the spring case 19E and the valve element 4E, constantly urging the valve element 4E toward the valve opening direction.

In a state where the rotor 57 rotates in one direction by excitation of the stator 55, the screw drive member 22E is lowered and the valve element 4E is seated on the valve seat 15E, by which a valve closed state is realized. The valve element 4E in this state is at a shutoff position in which the flow path is shutoff. Meanwhile, in a state where the rotor 57 rotates in the other direction, the screw drive member 22E is elevated, and the valve element 4E is spaced apart from the valve seat 15E to open the valve, such that refrigerant is flown through the valve chamber VC between the first piping T1 and the second piping T2. The valve element 4 in this state is in an opened position in which the flow path is opened.

Since the present embodiment is provided with the reduction mechanism 6E in which two planetary gear reduction mechanisms are coupled in series, a high reduction ratio obtained by multiplying the first reduction ratio and the second reduction ratio can be realized, such that a surface pressure between the valve element 4E and the valve seat 15E in the valve closed state is increased and the sealed state may be enhanced. The reduction mechanism adopted in the first to fifth embodiments may also be used instead of the reduction mechanism 6E.

The present invention is not limited to the above-described embodiments. Modification of arbitrary components of the above-descried embodiments is enabled within the scope of the present invention. Moreover, an arbitrary component may be added to or deleted from the above-described embodiments. The number of planetary gear reduction mechanisms may be any number, as long as a plurality of planetary gear reduction mechanisms including at least one mechanical paradox planetary gear reduction mechanism are arranged in series and coupled in a manner capable of transmitting rotational speed.

### [Reference Signs List]

1, 1A, 1B, 1C, 1D, 1E electrically driven valve
2, 10E valve body portion
3 can
4, 4E valve element
5 stepping motor
6, 6A, 6B, 6C, 6D, 6E reduction mechanism
7 output shaft
8 shaft member
VC valve chamber
T1 first piping
T2 second piping

## Claims

1. An electrically driven valve comprising:
an output shaft configured to drive a valve element;
a valve body portion including a valve chamber accommodating the valve element;
a motor including a stator and a rotor; and
a reduction mechanism configured to reduce a rotational speed of the rotor and transmit the reduced rotational speed to the output shaft,
wherein the reduction mechanism includes a plurality of planetary gear reduction mechanisms that are connected in series and that include at least one mechanical paradox planetary gear reduction mechanism.

2. The electrically driven valve according to claim 1,
wherein the rotor is rotated integrally with a sun gear of the planetary gear reduction mechanism that is arranged closest to the rotor.

3. The electrically driven valve according to claim 1,
wherein the rotor is rotated integrally with a carrier that rotatably supports a planetary gear of the planetary gear reduction mechanism that is arranged closest to the rotor.

4. The electrically driven valve according to any one of claims 1 to 3,
wherein, in at least two of the planetary gear reduction mechanisms, a fixing ring gear that is coupled to the valve body portion and that meshes with a planetary gear is used in common.

5. The electrically driven valve according to any one of claims 1 to 3,
wherein, in at least two of the planetary gear reduction mechanisms, at least two fixing ring gears each meshing with a planetary gear are spaced apart in an axial direction, and are coupled to the valve body portion through a thin-wall cylindrical body.

6. The electrically driven valve according to any one of claims 1 to 3,
wherein the reduction mechanism includes two mechanical paradox planetary gear reduction mechanisms, wherein an output gear member of one of the mechanical paradox planetary gear reduction mechanisms is configured to rotate integrally with a sun gear of the other one of the mechanical paradox planetary gear reduction mechanisms.

7. The electrically driven valve according to any one of claims 1 to 3,
wherein the reduction mechanism includes two mechanical paradox planetary gear reduction mechanisms, wherein an output gear member of one of the mechanical paradox planetary gear reduction mechanisms is configured to rotatably support a planetary gear of the other one of the mechanical paradox planetary gear reduction mechanisms.

8. The electrically driven valve according to any one of claims 1 to 7,
wherein the output shaft is joined to a carrier of the planetary gear reduction mechanism that is arranged closest to the output shaft.

9. The electrically driven valve according to any one of claims 1 to 7,
wherein the output shaft is joined to an output gear member of the planetary gear reduction mechanism that is arranged closest to the output shaft.

10. The electrically driven valve according to any one of claims 1 to 9,
wherein a conversion mechanism configured to convert a rotational movement to a linear movement is arranged between the output shaft and the valve element.

11. An actuator comprising:
an output shaft configured to drive a valve element;
a motor including a stator and a rotor; and
a reduction mechanism configured to reduce a rotational speed of the rotor and transmit the reduced rotational speed to the output shaft,
wherein the reduction mechanism includes a plurality of planetary gear reduction mechanisms that are connected in series and that include at least one mechanical paradox planetary gear reduction mechanism.
